Europäisches Patentamt

European Patent Office

Office européen des brevets

(11) Veröffentlichungsnummer: **0 381 659**
**A2**

## (12) EUROPÄISCHE PATENTANMELDUNG

(21) Anmeldenummer: 90890010.3

(22) Anmeldetag: 16.01.90

(51) Int. Cl.⁵: **B29D 30/00**

(30) Priorität: **18.01.89 AT 89/89**

(43) Veröffentlichungstag der Anmeldung:
**08.08.90 Patentblatt 90/32**

(84) Benannte Vertragsstaaten:
**BE DE DK ES FR GB IT NL SE**

(71) Anmelder: **LIM KUNSTSTOFF TECHNOLOGIE GESELLSCHAFT M.B.H.**
**Industriestrasse 3**
**A-2421 Kittsee(AT)**

(72) Erfinder: **Schmidt, Oskar**
**Freyung 4**
**A-1010 Wien(AT)**
Erfinder: **Grünner, Erich**
**Voltergasse 43/23**
**A-1210 Wien(AT)**

(74) Vertreter: **Rippel, Andreas, Dipl.-Ing.**
**Maxingstrasse 34**
**A-1130 Wien(AT)**

(54) Verfahren zur Herstellung eines tragfähigen Körpers, z.B. Fahrzeugreifens.

(57) Bei der Herstellung eines Fahrzeugreifens wird ein im wesentlichen zylindrischer Innenteil 1 auf einen Halter 2 aufgebracht, der auf der einen Seite eine feste Scheibe 3, auf der anderen Seite eine verschiebbare Scheibe 4 aufweist. Die Enden des Innenteiles 1 sind mittels Ringen 5 und Schrauben an den beiden Scheiben 3 und 4 dichtend festgeklemmt. Auf den Innenteil 1 werden anschließend zwei kreisrunde Ringe 6 aufgebracht, über die eine Armierung 7 gewickelt wurde.

In einem weiteren Verfahrensschritt wird die so hergestellte Einheit in eine Form eingesetzt, die im wesentlichen aus zwei achsial zueinander beweglichen Formhälten 8 und 9 besteht. Unter gleichzeitiger achsialer Verschiebung der beiden Formhälften 8 und 9 sowie der beiden Scheiben 3 und 4 wird - angedeutet durch den Pfeil 10 - ein Druckmittel in den Raum innerhalb des Innenteiles 1 eingedrückt. Dadurch wird der Innenteil 1 gegen die Formhälften 8 und 9 hin aufgeweitet, wobei ein Zwischenraum 11 zwischen der Außenseite des Innenteiles 1 und der Innenseite der Formhälften 8 und 9 verbleibt. In den Raum 11 wird ein Elastomer eingespritzt oder gegossen.

Nach dem Erhärten dieses Elastomers können die Ringe 5 gelöst, die Formhälften 8 und 9 auseinandergefahren und der Halter 2 ausgezogen werden. Der Reifen ist damit hergestellt.

FIG. 3

## Verfahren zur Herstellung eines tragfähigen Körpers, z. B. Fahrzeugreifens

Die Erfindung bezieht sich auf ein Verfahren zur Herstellung eines tragfähigen Körpers, z. B. Fahrzeureifens, der zwei Ringe, eine von den Ringen gehaltene Armierung sowie einen Außenteil und einen Innenteil aus Elastomeren aufweist, wobei vorerst die Armierung um die Ringe gewickelt, anschließend dieses Gebilde auf den vorgefertigten Innenteil aufgebracht und schließlich der Innenteil gegen eine Form aufgeweitet wird.

Bei einem aus der AT-PS 383.541 bekannten Verfahren dieser Art wird ein vorgefertigter Reifenaußenteil, bestehend aus Lauffläche, Gürtel und Teilen der Seitenwände mit einem Reifeninnenteil, bestehend aus Dichtzylinder, Wulstringen und Radialwicklungen derart zusammengefügt, daß über einen zylindrischen Balg der vorgefertigte elastische Dichtzylinder und darüber die mit einer Radialwicklung versehenen Wulstringe gezogen werden, worauf in einem weiteren Arbeitsgang der so entstandene Innenteil gegen den Außenteil aufgeweitet wird und Außenteil und Innenteil durch Einspritzen einer Verbindungsschicht oder durch Verkleben verbunden werden. Anschließend wird der Balg aus dem enstandenen Reifen zurückgezogen.

Dieses gegenüber anderen bekannten Verfahren, insbesonders solchen mit einem festen Kern, vorteilhafte Verfahren weist auch Nachteile auf. Einerseits sind nämlich mehrere vorgefertigte Teile erforderlich, andererseits hat die Verwendung eines elastischen Balges auch Nachteile. Durch die erforderliche Wandstärke des Balges insbesondere im Felgenbereich entstehen Zentrierungenauigkeiten bei den Wulstringen und es wird auch die Reifenwand nach innen gezogen. Darüberhinaus wird der Balg beim Aufweiten hoch beansprucht und muß daher nach verhältnismäßig kurzem Einsatz ausgewechselt werden.

Bei einem weiteren bekannten Verfahren (AT-PS 379.346) wird ein mit einer Radialarmierung versehener Reifeninnenkörper auf einen aufblasbaren Balg aufgezogen und nach Anbringen von Wulstkernen sowie eines vorgefertigten Gurtes mit dem Material des Reifenaußenkörpers umspritzt bzw. umgossen. Bei diesem Verfahren entfällt zwar die gesonderte Herstellung des Reifenaußenkörpers, jedoch wird auch hier ein aufblasbarer Balg verwendet, sodaß die vorstehend geschilderten Nachteile auftreten. Überdies ist bei diesem bekannten Verfahren die Zentrierung der Wulstkerne schwierig.

Die Erfindung hat es sich zum Ziel gesetzt ein Verfahren zu schaffen, das die Nachteile der bekannten Verfahren nicht aufweist und bei dessen Durchführung insbesondere die Verwendung eines elastischen Balges nicht erforderlich ist. Erreicht wird dies, ausgehend von einem Verfahren der eingangs genannten Art dadurch, daß zur Aufweitung des Innenteiles ein flüssiges oder gasförmiges Druckmittel auf den Innenteil zur Einwirkung gebracht wird und daß anschließend der Außenteil in an sich bekannter Weise durch Einspritzen oder Eingießen von Elastomeren in den Hohlraum zwischen den mit der Armierung und den Ringen versehenen Innenteil und der Form hergestellt wird. Beim erfindungsgemäßen Verfahren wird daher der Innenteil direkt von einem Fluid beaufschlagt, sodaß ein gesonderter Balg nicht erforderlich ist. Es ist auch kein vorgefertigter Außenteil notwendig.

Das erfindungsgemäße Verfahren kann zur Herstellung verschiedenartig geformter Körper verwendet werden. Wird es zur Herstellung eines Fahrzeugreifens eingesetzt, werden in an sich bekannter Weise zwei gleich große kreisrunde Ringe umwickelt und es wird als Innenteil im wesentlichen ein Rohr eingesetzt. In einem solchen Fall kann vor dem Aufweiten des Innenteiles in die Form mindestens ein vorgefertigter Gurt eingebracht werden. Es ist aber auch möglich, vor dem Aufweiten des Innenteiles in die Form einen Gurt samt der Lauffläche eines Fahrzeugreifens einzubringen.

Bei einer bevorzugten Ausführungsform des erfindungsgemäßen Verfahrens wird der Innenteil über einen Halter gezogen, darüber werden die umwickelten Ringe geschoben, anschließend wird dieses Gebilde in die Form eingesetzt, wonach aufgeweitet und daraufhin gespritzt oder gegossen wird, worauf der Halter wieder zurückgezogen wird.

Bei einer abgewandelten Ausführungsform des Verfahrens nach der Erfindung werden die beiden umwickelten Ringe in die Form eingesetzt, der Innenteil eingebracht und abgedichtet, sowie anschließend aufgeweitet.

Die Armierung kann in bekannter Weise unter einem ganz geringen Winkel zur Ringachse und damit eingängig gewickelt werden. Es ist aber auch möglich, die Armierung mehrgängig und vorzugsweise mehrlagig über die Ringe zu wickeln. Bei mehrlagiger Wicklung kann zwischen die einzelnen Lagen der Armierung ein verformbares Cordgewebe gewickelt sein.

Nachstehend ist die Erfindung an Hand von in den Zeichnungen dargestellten Ausführungsbeispielen näher beschrieben, ohne jedoch auf diese Beispiele beschränkt zu sein. Dabei zeigen jeweils schematisch: Fig. 1 den auf einem Halter aufgebrachten Innenteil; Fig. 2 den nunmehr mit den umwickelten Ringen versehenen Innenteil; Fig. 3 eine Form in der oberen Hälfte in offener und in der unteren Hälfte in geschlossener Stellung mit aufgeweitetem Innenteil; Fig. 4 eine Ausführungsform mit einem Gurt; Fig. 5 eine weitere Ausführungsform mit einem Gurt und einer Lauffläche; Fig. 6 eine abgewandelte Ausführungsform einer Form und Fig. 7 eine Variante mit ungleich großen Ringen.

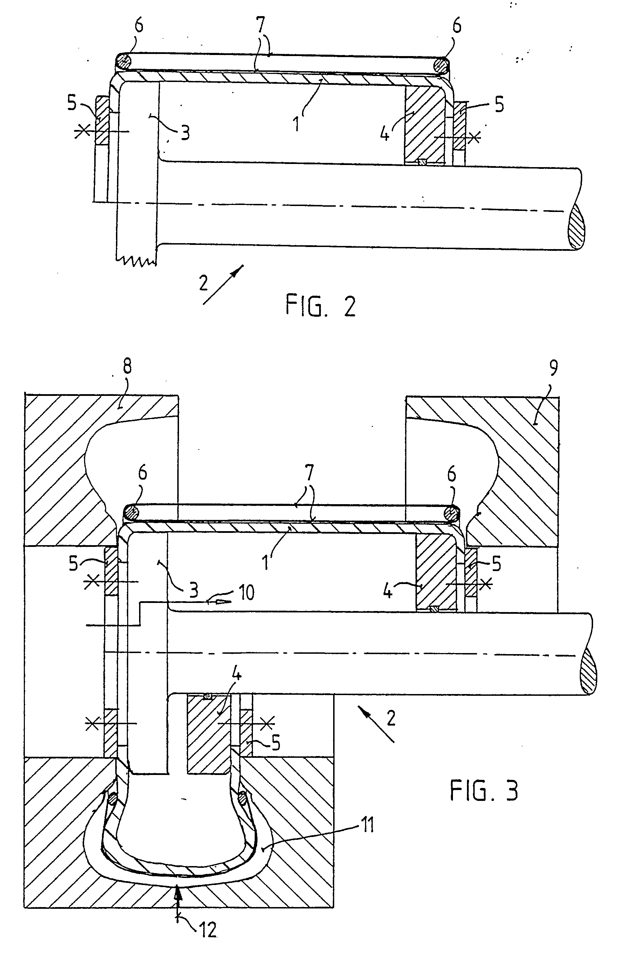

Gemäß Fig. 1 wird ein im wesentlichen zylindrischer Innenteil 1 auf einen Halter 2 aufgebracht, der auf der einen Seite eine feste Scheibe 3, auf der anderen Seite eine verschiebbare Scheibe 4 aufweist. Die Enden des Innenteiles 1 sind mittels Ringen 5 und Schrauben an den beiden Scheiben 3 und 4 dichtend festgeklemmt. Der Innenteil 1 wird z.B. im Schleuderguß hergestellt oder auch extrudiert.

Auf den am Halter 2 festgeklemmten Innenteil 1 wird ein Gebilde aufgebracht, das aus zwei kreisrunden, gleich großen Ringen 6 besteht, über das eine Armierung 7 gewickelt wurde (Fig.2). Durch den Wickelvorgang, der z. B. auf die in der AT-PS 383.541 beschriebene Weise erfolgen kann, wird ein annähernd kreiszylindrischer Körper hergestellt, dessen Mantel von der Armierung 7 gebildet wird. Diese Armierung 7 kann aus jedem für eine Armierung geeigneten Material, insbesondere Cord bestehen.

In einem weiteren Verfahrensschritt wird die Einheit nach Fig. 2 in eine Form gemäß Fig. 3 eingesetzt, die im wesentlichen aus zwei achsial zueinander beweglichen Formhälften 8 und 9 besteht, deren Innenkontur der Außenkontur des herzustellenden Körpers entspricht. Unter gleichzeitiger achsialer Verschiebung der beiden Formhälften 8 und 9 sowie der beiden Scheiben 3 und 4 wird - angedeutet durch den Pfeil 10 - ein gasförmiges oder flüssiges Druckmittel in den Raum innerhalb des Innenteiles 1 eingedrückt. Dadurch wird der Innenteil 1 gegen die Formhälften 8 und 9 hin aufgeweitet, wobei ein Zwischenraum 11 zwischen der Außenseite des Innenteiles 1 und der Innenseite der Formhälften 8 und 9 verbleibt. Diese Lage ist in Fig. 3 unten dargestellt. In den Raum 11 wird ein Elastomer eingespritzt oder gegossen, was durch den Pfeil 12 angedeutet ist.

Nach dem Erhärten dieses Elastomers können die Ringe 5 gelöst, die Formhälften 8 und 9 auseinandergefahren und der Halter 2 aufgezogen werden. Der Körper ist damit hergestellt.

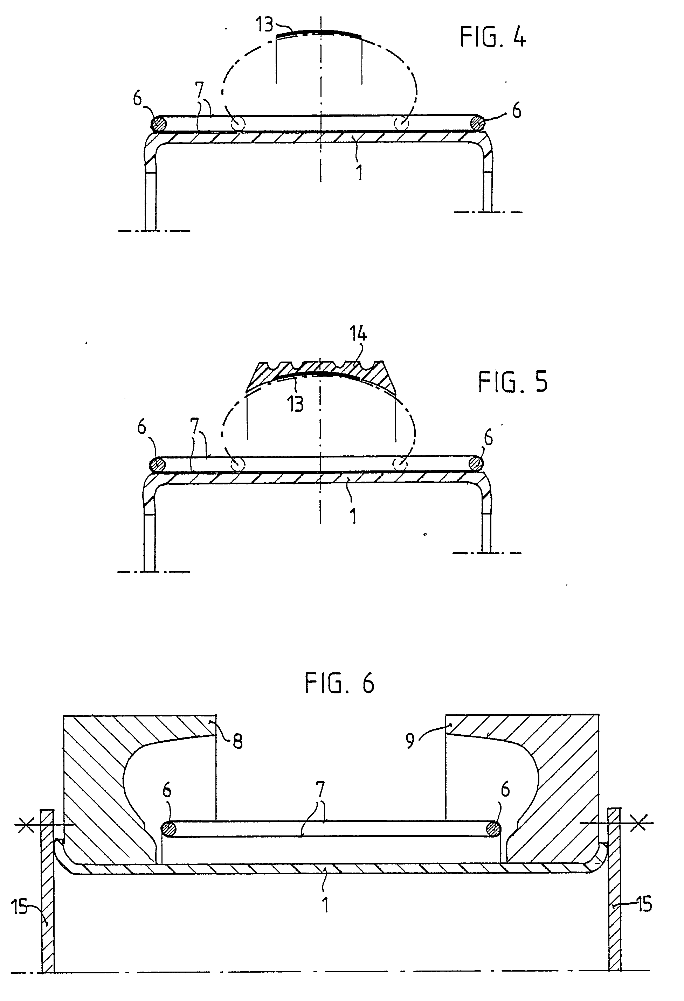

In Fig. 4 ist angedeutet, daß in die Form 8, 9 ein Gurt 13 eingebracht wurde, gegen den der Innenteil 1 aufgeweitet wird.

Gemäß Fig. 5 kann in die Form 8, 9 auch ein Gurt 13 samt der Lauffläche 14 eines Fahrzeugreifens eingebracht werden.

Das an Hand der Fig. 6 veranschaulichte Verfahren unterscheidet sich von dem unter Zuhilfenahme der Fig. 3 beschriebenen Verfahren dadurch, daß vorerst die mit der Armierung 7 versehenen Ringe 6 in die Form 8, 9 eingesetzt werden, anschließend der Innenteil 1 eingebracht und mittels Dichtscheiben 15 abgedichtet wird, worauf in den vom Innenteil 1 und den Dichtscheiben 15 umschlossenen Raum Druckmittel eingedrückt und dadurch der Innenteil gegen die Form aufgeweitet wird. Anschließend wird wieder der Außenteil gespritzt oder gegossen und entformt.

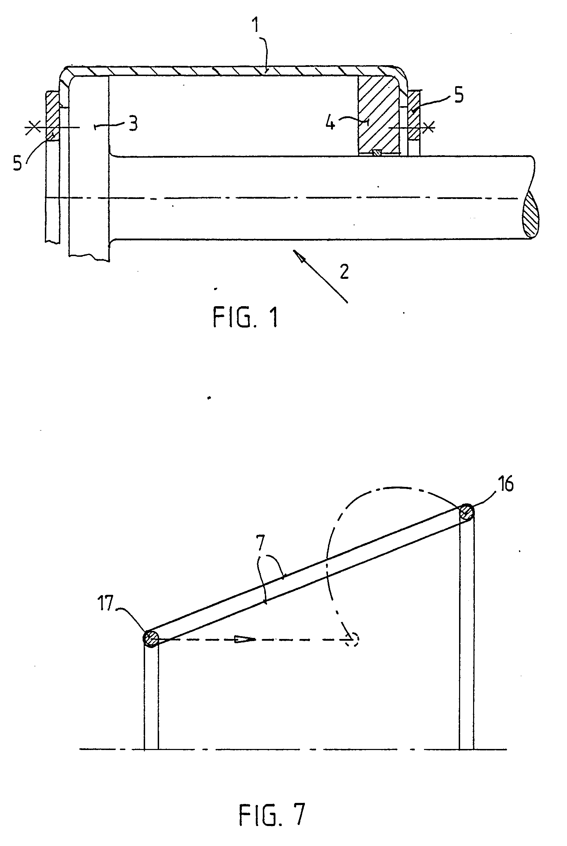

Schließlich ist noch in Fig. 7 gezeigt, daß auch ungleich große Ringe 16 und 17 mit einer Armierung 7 umwickelt werden können, wobei ein etwa kegelförmiges Gebilde entsteht. Nach dem Aufbringen dieses Gebildes auf einen ebenfalls kegelförmigen Innenteil, Einbringen in eine Form und Spritzen bzw. Gießen des Außenteiles entsteht ein Körper, der z.B. mit einem Boden versehen wird und einen äußerst stabilen Behälter darstellt.

Es wäre auch möglich, einem oder beiden Ringen 16 bzw. 17 eine von der Kreisform abweichende Form zu geben. Dadurch können Körper der verschiedensten Konfiguration hergestellt werden.

## Ansprüche

1. Verfahren zur Herstellung eines tragfähigen Körpers, z.B. Fahrzeugreifens, der zwei Ringe, eine von den Ringen gehaltene Armierung sowie einen Außenteil und einen Innenteil aus Elastomeren aufweist, wobei vorerst die Armierung um die Ringe gewickelt, anschließend dieses Gebilde auf den vorgefertigten Innenteil aufgebracht und schließlich der Innenteil gegen eine Form aufgeweitet wird, dadurch gekennzeichnet, daß zur Aufweitung des Innenteiles ein flüssiges oder gasförmiges Druckmittel auf den Innenteil zur Einwirkung gebracht wird und daß anschließend der Außenteil in an sich bekannter Weise durch Einspritzen oder Eingießen von Elastomeren in den Hohlraum zwischen den mit der Armierung und den Ringen versehenen Innenteil und der Form hergestellt wird.

2 .Verfahren nach Anspruch 1, dadurch gekennzeichnet, daß in an sich bekannter Weise zwei gleich große kreisrunde Ringe umwickelt werden und als Innenteil im wesentlichen ein Rohr eingesetzt wird.

3. Verfahren nach Anspruch 2, dadurch gekennzeichnet, daß vor dem Aufweiten des Innenteiles in die Form mindestens ein vorgefertigter Gurt eingebracht wird.

4. Verfahren nach Anspruch 2, dadurch gekennzeichnet, daß vor dem Aufweiten des Innenteiles in die Form ein Gurt samt der Lauffläche eines Fahrzeugreifens eingebracht wird.

5. Verfahren nach einem der Ansprüche 1 bis 4, dadurch gekennzeichnet, daß der Innenteil über einen Halter gezogen wird, darüber die umwickelten Ringe geschoben werden, anschließend dieses Gebilde in die Form eingesetzt wird, wonach aufgeweitet und daraufhin gespritzt oder gegossen wird, worauf der Halter wieder zurückgezogen wird.

6. Verfahren nach einem der Ansprüche 1 bis 4, dadurch gekennzeichnet, daß die beiden umwickelten Ringe in die Form eingesetzt werden, der Innenteil eingebracht und abgedichtet wird, sowie anschließend aufgeweitet wird.

7. Verfahren nach einem der Ansprüche 1 bis 6, dadurch gekennzeichnet, daß die Armierung mehrgängig und vorzugsweise mehrlagig über die Ringe gewickelt wird.

8. Verfahren nach Anspruch 7, dadurch gekennzeichnet, daß zwischen die einzelnen Lagen der Armierung ein deformierbares Cordgewebe gewickelt wird.

FIG. 2

FIG. 3

FIG. 4

FIG. 5

FIG. 6

FIG. 1

FIG. 7